# EUROPEAN PATENT APPLICATION

(11) **EP 3 136 156 A1**
(43) Date of publication of application: **01.03.2017**
(21) Application number: 16185366.8
(22) Date of filing: 23.08.2016
(51) Int. Cl.: G02B 27/28, H01S 3/106, G02B 7/00, G01J 3/12, G01J 3/02

(54) **WAVELENGTH TUNABLE BIREFRINGENT FILTER**

(30) Priority: 25.08.2015 JP 2015165872
(71) Applicant: Luceo Co., Ltd., Itabashi-ku Tokyo 173-0024 (JP)
(72) Inventor: ICHIMOTO, Kiyoshi, Gifu, 506-1314 (JP); YOSHIMURA, Kensho, Tokyo, 173-0024, (JP); SAKASHITA, Ryuichi, Tokyo, 173-0024, (JP); HONDA, Umehiko, Tokyo, 173-0024, (JP); HANASHIMA, Masakazu, Tokyo, 173-0024, (JP); SEO, Kazuhiro, Tokyo, 173-0024, (JP)
(74) Representative: Kuhnen & Wacker

(57) **Abstract**

A wavelength tunable filter (200) selectively transmitting light of any desired wavelength within the range of 450 nm to 1100 nm without using a band pass filter is disclosed. The wavelength tunable filter (200) comprises a plurality of polarizers (101a to 101f) and a plurality of units between the adjacent polarizers (101 a to 101f) on a common optical axis (111) in a housing (201). Each unit has, in order from light incident side, a quartz birefringent plate (102), an ultra-wide band 1/4 waveplate (103) and an ultra-wide band 1/2 waveplate (104). The ultra-wide band 1/2 waveplate (104) is accommodated in a cylindrical rotatable body (303; 403; 503) and it is rotated by a rotating mechanism.

## Description

### Technical Field

The present invention relates to a wavelength tunable filter using an ultra-wide band waveplate.

### Background Art

The Lyot filter is known as one type of a wavelength tunable filter.

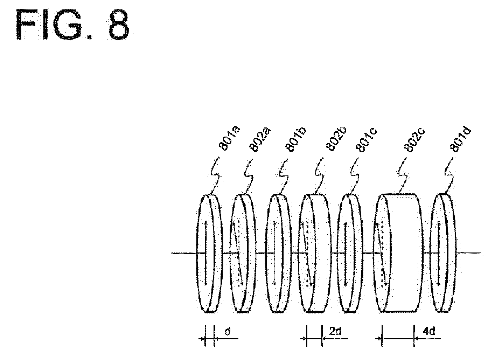

For example as shown in Fig. 8, the Lyot filter arranges four polarizers 801 a to 801 d with parallel transmission axes and disposes birefringent plates 802a to 802c therebetween as respective phase elements, the birefringent plates being disposed so that optic axes of a crystal thereof are at 45 degrees with respect to the transmission axes. The material for the birefringent plates 802a to 802c is an optically uniaxial crystal, such as calcite or quartz. The thicknesses of the birefringent plates 802 are configured to be twice the thickness of a previous birefringent plate 802, that is to say, when representing the thickness of the birefringent plate 802a as d, the thickness of the birefringent plate 802b is 2d, and the thickness of the birefringent plate 802c is 4d. Each optic retardation dΔn (d is thickness, Δn is birefringence) of spectra transmitting through the birefringent plates 802a to 802c, when λ₀ is the specific wavelength, is λ₀, 2λ₀, 4λ₀, respectively. Therefore, when the spectra that transmit them are superimposed, a sharp peak is achievable at λ₀which is the specific wavelength.

However, the conventional Lyot filter takes in light that has a wavelength width of 1 nm, and accurately adjusts this to a narrowband of 0.01 nm to 0.03 nm. Therefore, when observing light of a plurality of wavelengths that have largely different wavelengths, band pass filters by the number of the wavelengths have to be replaced as appropriate, and therefore the troublesome works are required.

Meanwhile, as an ultra-wide band waveplate capable of achieving an appropriate retardation continuously throughout the entire waveband of a visible light region (450 nm to 1100 nm), a waveplate disclosed in, for example, Patent Document 1 or Patent Document 2 has been known.

### Prior Art Documents

### Patent Documents

[Patent Document 1]Japanese Unexamined Patent Application Publication No. 2007-256937
[Patent Document 2]Japanese Unexamined Patent Application Publication No. 2008-198244

### Summary of the Invention

### Problem to be Solved by the Invention

The present invention is accomplished by taking the above situation into consideration. That is to say, an object of the present invention is to provide a wavelength tunable filter allowing for selectively transmitting light of a desired wavelength from a wavelength range of 450 nm to 1100 nm without using a band pass filter.

### Means to Solve the Problem

According to one aspect of the present invention, there is provided a wavelength tunable filter comprising:
n+1 (n is an integer) polarizers disposed on a common optical axis;
n units disposed between said polarizers, arranged by aligning on said optical axis, each unit including, in an order that incident light transmits, a quartz birefringent plate, an ultra-wide band 1/4 waveplate and an ultra-wide band 1/2 waveplate (104), each of said n quartz birefringent plates having a thickness of 2ⁱ⁻¹d (i=1 to n) where d is a thickness of the thinnest quartz birefringent plate;
a housing adapted to hold said polarizers and said units therein;
a cylindrical rotatable body adapted to hold the ultra-wide band 1/2 waveplate therein and rotatable about said optical axis within said housing (201); and
a rotating mechanism to rotate said rotatable body.

The rotating mechanism may be a stepping motor provided outside the housing.

The rotating mechanism may be an ultrasonic motor provided adjacent to the rotatable body.

The rotating mechanism may be a combination of an annular member provided on an outer circumference of the housing in a rotatable manner, a first magnet attached to the annular member, and a second magnet attached to the rotatable body.

### Effects of the Invention

According to the present invention, it is possible to provide a wavelength tunable filter that allows for selectively transmitting light of a desired wavelength from a wavelength range of 450 nm to 1100 nm without using a band pass filter.

### Brief Description of Drawings

Fig. 1 is a view showing an optical system 100 adopted in a wavelength tunable filter 200 according to the present invention.
Fig. 2 is a cross sectional view showing a configuration of the wavelength tunable filter 200 according to the present invention.
Fig. 3 is a view showing a first embodiment of a rotating mechanism to rotate an ultra-wide band 1/2 waveplate 104 about the optical axis.
Fig. 4 is a view showing a second embodiment of a rotating mechanism to rotate the ultra-wide band 1/2 waveplate104 about the optical axis.
Fig. 5 is a view showing a third embodiment of a rotating mechanism to rotate the ultra-wide band 1/2 waveplate 104 about the optical axis.
Fig. 6 is a view showing interference of light transmitted through a quartz birefringent plate 102.
Fig. 7 is a view showing movement or shift of a peak value of a wavelength of light transmitted through the wavelength tunable filter 200 according to the present invention.
Fig. 8 is a view showing an optical system of a conventional Lyot filter.

### Description of the Preferred Embodiments

Described below in detail is one embodiment of a wavelength tunable filter according to the present invention, with reference to the drawings.

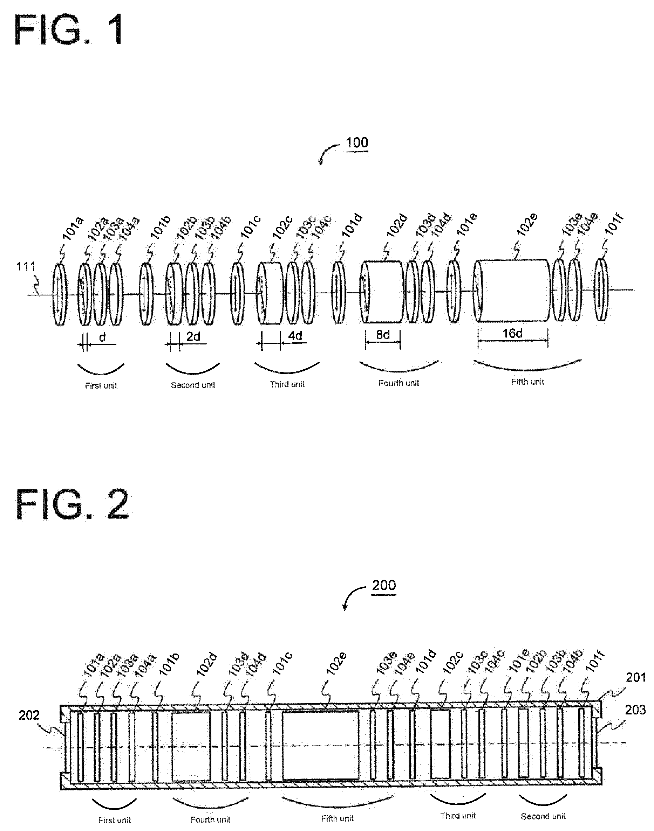

Fig. 1 is a view showing an optical system 100 used in a wavelength tunable filter 200 according to the present invention. Light enters from the left side in Fig. 1. As shown therein, the optical system 100 is configured of polarizers 101 a to 101f, and optical units disposed between the polarizers 101 a to 101f. The optical units disposed between the polarizers 101a to 101f are composed of, in the sequential order that incident light transmits through, a quartz birefringent plate 102, an ultra-wide band 1/4 waveplate 103, and an ultra-wide band 1/2 waveplate 104, as phase elements. The polarizers 101a to 101f, quartz birefringent plates 102a to 102e, ultra-wide band 1/4 waveplates 103a to 103e, and ultra-wide band 1/2 waveplates 104a to 104e are all disposed parallel to each other on one common optical axis 111.

Various publicly known polarizers can be used for the polarizers 101 a to 101f, in accordance with a desired transmittance wavelength range. An example is a polarizer having a polarizing effect from a visible region to an infrared region, such as a commercially available wire grid polarizer. Moreover, the polarizers 101a to 101f are disposed such that their transmission axes are parallel to each other, that is, in parallel-Nicols.

Thicknesses of the quartz birefringent plates 102a to 102e are configured to be as with the conventional Lyot filter, that is to say, 2ⁱ⁻¹d (i = 1 to n) wherein d is the thickness of the thinnest quartz birefringent plate. More specifically, with d representing the thickness of the quartz birefringent plate 102a, the thickness of the quartz birefringent plate 102b is 2d, the thickness of the quartz birefringent plate 102c is 4d, the thickness of the quartz birefringent plate 102d is 8d, and the thickness of the quartz birefringent plate 102e is 16d. Here, the thickness d serving as a standard may be freely determined in accordance with a desired wavelength to be adapted with. Moreover, the quartz birefringent plates 102a to 102e are disposed so that the optic axis of a crystal is angled by 45 degrees with respect to the transmission axes of the polarizers 101a to 101f.

Fig. 1 shows a form that disposes units including a thin quartz birefringent plate 102 in an order from the left to the right, however the order of the units is not limited to this order. Fig. 2 described later is of a form that has units including thicker quartz birefringent plates 102 disposed towards the center. By disposing the units including thicker quartz birefringent plates 102 towards the center, it is possible to reduce inclination in a centroid of the wavelength tunable filter 200 and improve the stability in temperature of the quartz birefringent plate 102 in which temperature requirements become severe as the thickness increases.

Next, described is a configuration of a wavelength tunable filter 200 according to the present invention, with reference to Fig. 2.

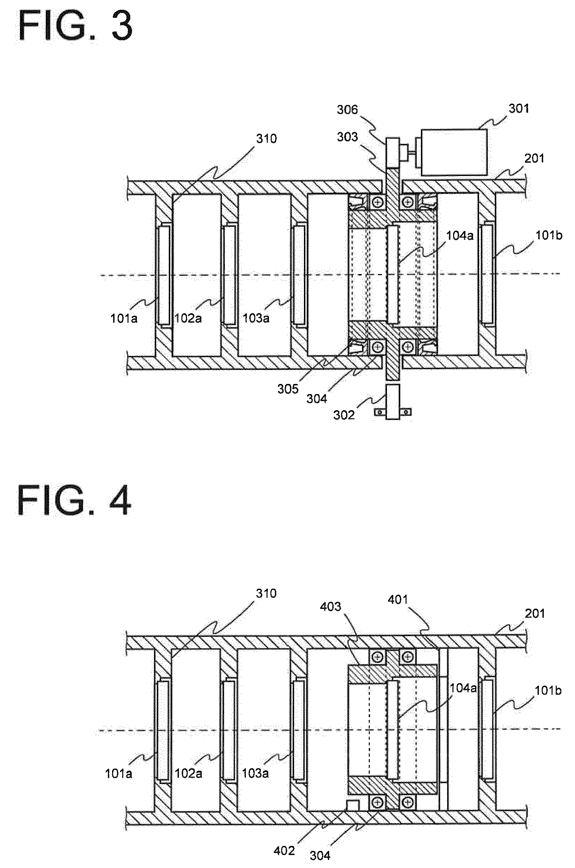

Fig. 2 is a cross sectional view showing a configuration of a wavelength tunable filter 200 according to the present invention. As shown therein, the wavelength tunable filter 200 includes an optical system 100, a housing 201, a glass plate 202, a glass plate 203, and a rotating mechanism to rotate the ultra-wide band 1/2 waveplates 104a to 104e about the optical axis 111. Light enters from the left side in Fig. 2. The rotating mechanism will be described later with reference to Fig. 3 to Fig. 5, and therefore it is omitted in Fig. 2. Moreover, an internal configuration to hold the polarizers 101a to 101f, quartz birefringent plates 102a to 102e, ultra-wide band 1/4 waveplates 103a to 103e, and ultra-wide band 1/2 waveplates 104a to 104e will be described later with reference to Fig. 3, and thus it is omitted in Fig. 2.

The housing 201 is a cylindrical member whose front and rear parts are open, and is filled with refractive liquid upon holding the optical system 100 in the housing 201. The material for the housing 201 is not particularly limited, and may be freely selected from various materials such as synthetic resin or stainless steel. An example of the refractive liquid to fill the inside of the housing 201 is a silicone oil.

The glass plate 202 and the glass plate 203 are fixed to the front and rear openings of the housing 201, respectively, and they seal the inside of the housing 201. In order to prevent the refractive liquid filled in the housing 201 from leaking out through gaps in parts where the glass plate 202 and the glass plate 203 are fixed, it is preferable that the glass plate 202 and the glass plate 203 be fixed to the front and rear openings of the housing 201 together with a sealing member such as an oil seal.

In the optical system 100 according to the invention shown in Fig. 2, a fifth unit including the thickest quartz birefringent plate 102e is disposed in the center, a fourth unit including the second thickest quartz birefringent plate 102d is disposed on a left side of the fifth unit, and a third unit including a third thickest quartz birefringent plate 102c is disposed on a right side of the fifth unit. Furthermore, a first unit including the thinnest quartz birefringent plate 102a is disposed in the left edge, and a second unit includingthe second thinnest quartzbirefringent plate 102b is disposed in the right edge. As such, by disposing the units including thicker quartz birefringent plates 102 towards the center, it is possible to reduce inclination in a centroid of the wavelength tunable filter 200 and improve the stability in temperature of the quartz birefringent plate 102 in which temperature requirements become severe as the thickness increases.

Next, described is a first embodiment of a rotating mechanism to rotate the ultra-wide band 1/2 waveplates 104a to 104e about the optical axis 111, with reference to Fig. 3. Fig. 3 shows only the first unit and its surroundings, and the other units are also of the same form.

Fig. 3 is a view showing a first embodiment of a rotating mechanism to rotate the ultra-wide band 1/2 waveplate 104a about the optical axis 111. As shown, the wavelength tunable filter 200 includes a stepping motor 301, a photosensor 302, a rotatable body 303, a bearing 304, and an oil seal 305.

The stepping motor 301 is a drive motor that rotates the rotatable body 303, and it s provided outside the housing 201.

The photosensor 302 is a sensor for detecting a rotated angle of the rotatable body 303, and it is provided outside the housing 201.

The rotatable body 303 is a cylindrical member for holding the ultra-wide band 1/2 waveplate 104a, and a part of the outer circumference is formed to be of a disk shape. The disk-shaped part formed in a part of the outer circumference of the rotatable body 303 extends outside the housing 201, and a gear is formed on the outer circumference part. This gear engages with a pinion gear 306 attached to a shaft of the stepping motor 301. The material of the rotatable body 303 is not particularly limited, and may be freely selected from various materials such as synthetic resin or titanium.

The bearing 304 is provided within the housing 201, and it holds the rotatable body 303 in a rotatable manner.

The oil seal 305 is a sealing member for preventing the refractive liquid from leaking out of the housing 201, and it is provided adjacent to the bearing 304.

The rotatable body 303 is rotatable about the optical axis 111 inside the housing 201 by the bearing 304. Therefore, by driving the stepping motor 301, it is possible to rotate the rotatable body 303 that holds the ultra-wide band 1/2 waveplate 104a, about the optical axis 111.

The stepping motor 301 may be provided per rotatable body 303 to separately rotate each rotatable body 303, or all the rotatable bodies 303 may be rotated by one stepping motor 301 via a gear.

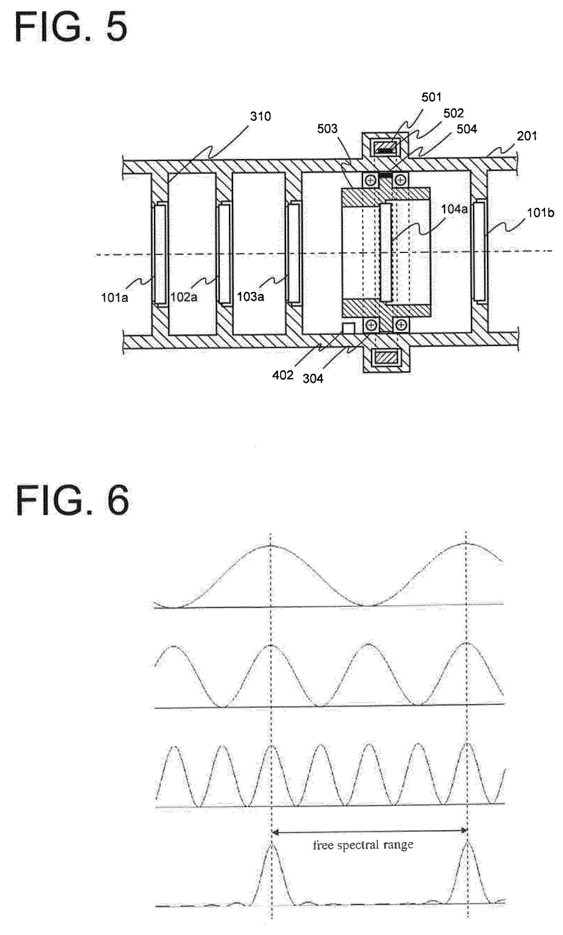

The configuration for holding the polarizer 101 a, the quartz birefringent plate102a, and the ultra-wide band 1/4 waveplate 103a inside the housing 201 is not particularly limited, and for example may be held by an annular holding member 310 provided inside the housing 201, as shown in Fig. 3. This is also applicable to the embodiments of Fig. 4 and Fig. 5.

Next, described is a second embodiment of a rotating mechanism to rotate the ultra-wide band 1/2 waveplates 104a to 104e about the optical axis 111, with reference to Fig. 4. Fig. 4 shows only the first unit and its surroundings, and the other units are also of the same form.

Fig. 4 is a view showing a second embodiment of a rotating mechanism to rotate the ultra-wide band 1/2 waveplate 104a about the optical axis 111. As shown, the wavelength tunable filter 200 includes an ultrasonic motor 401, a photosensor 402, a rotatable body 403, and the bearing 304.

The ultrasonic motor 401 is a drive motor that rotates the rotatable body 403, and it is provided adjacent to the rotatable body 403, within the housing 201.

The photosensor 402 is a sensor for detecting a rotated angle of the rotatable body 403, and it is provided within the housing 201.

The rotatable body 403 is a cylindrical member for holding the ultra-wide band 1/2 waveplate 104a. The material of the rotatable body 403 is not particularly limited, and it may be freely selected from various materials such as synthetic resin or titanium.

The bearing 304 is provided within the housing 201, and it holds the rotatable body 403 in a rotatable manner.

The rotatable body 403 is rotatable about the optical axis 111 within the housing 201 by the bearing 304. Therefore, by driving or activating the ultrasonic motor 401, it is possible to rotate the rotatable body 403 that holds the ultra-wide band 1/2 waveplate 104a therein, about the optical axis 111.

Each of the rotatable bodies 403 includes one ultrasonic motor 401.

Next, described is a third embodiment of a rotating mechanism to rotate the ultra-wide band 1/2 waveplates 104a to 104e about the optical axis 111, with reference to Fig. 5. Fig. 5 shows only the first unit and its surroundings, and the other remaining units are also of the same form.

Fig. 5 is a view showing a third embodiment of a rotating mechanism to rotate the ultra-wide band 1/2 waveplate 104a about the optical axis 111. As shown therein, the wavelength tunable filter 200 includes an annular member 501, a first magnet 502 attached to the annular member 501, a rotatable body 503, a second magnet 504 attached to the rotatable body 503, the photosensor 402, and the bearing 304.

The annular member 501 is provided on the outer circumference of the housing 201 in a rotatable manner, and the first magnet 502 is attached to a part of the annular member 501. The material of the annular member 501 is not particularly limited, and it may well be selected among various materials such as synthetic resin or stainless steel.

The photosensor 402 is a sensor for detecting a rotated angle of the rotatable body 503.

The rotatable body 503 is a cylindrical member for holding the ultra-wide band 1/2 waveplate 104a, and the second magnet 504 is attached to a part thereof. The material of the rotatable body 503 is not particularly limited, and it may be freely selected from various materials such as synthetic resin or titanium.

The bearing 304 is provided within the housing 201, and it holds the rotatable body 503 in a rotatable manner.

The rotatable body 503 is rotatable about the optical axis 111 within the housing 201 by the bearing 304, and the annular member 501 and the rotatable body 503 synchronize and rotate by the first magnet 502 attached to the annular member 501 and the second magnet 504 attached to the rotatable body 503. Therefore, by rotating the annular member 501 with the stepping motor or the like, it is possible to rotate the rotatable body 503 that holds the ultra-wide band 1/2 waveplate 104a therein, about the optical axis 111.

Each of the rotatable bodies 503 includes an annular member 501, a first magnet 502, and a second magnet 504 as a set.

Next, described is an operation of the wavelength tunable filter 200 according to the present invention.

The wavelength tunable filter 200 according to the present invention allows for selectively transmitting light of a desired wavelength from a wavelength range of 450 nm to 1100 nm, by rotating the ultra-wide band 1/2 waveplates 104a to 104e with a rotating mechanism.

More specifically, light incident on the wavelength tunable filter 200 first enters the polarizer 101a. Next, the light that has transmitted through the polarizer 101 a and has become of linear polarization enters the quartz birefringent plate 102a disposed such that its optic axis of a crystal is angled by 45 degrees with respect to the transmission axis of the polarizer 101 a. The light that has transmitted through the quartz birefringent plate 102a becomes of a linear polarization or elliptical polarization (including a case of circular polarization), inclined in accordance with the wavelength and a thickness D1 of the quartz birefringent plate 102a. Next, the light transmitted through the quartz birefringent plate 102a enters the ultra-wide band 1/4 waveplate 103a. The light that has transmitted through the ultra-wide band 1/4 waveplate 103a becomes of a linear polarization with an inclination when entering the ultra-wide band 1/4 waveplate 103a and an inclination in accordance with a rotational direction (regarding the rotational direction, in a case of circular polarization or elliptical direction). Next, the light that has transmitted through the ultra-wide band 1/4 waveplate 103a enters the ultra-wide band 1/2 waveplate 104a. Here, the 1/2 waveplate provides a retardation of π (= λ/2) in a vibrating direction of the incident light (polarizing plane), and also when the polarizing plane of the incident light is entered in an oriented angle of θ degrees with respect to a fast axis (or a slow axis) of the 1/2 waveplate, the vibration direction is rotated by (2 x θ degrees). Therefore, the light transmitted through the ultra-wide band 1/2 waveplate 104a changes in inclination in accordance with the rotated angle of the ultra-wide band 1/2 waveplate 104a. Next, the light that has transmitted through the ultra-wide band 1/2 waveplate 104a enters the polarizer 101b. Hereinafter, the same change is repeated.

Next, an explanation is made on the angles to rotate the ultra-wide band 1/2 waveplates 104a to 104e.

The angles to rotate the ultra-wide band 1/2 waveplate 104 is to correspond to the thickness of respective ones of the quartz birefringent plates 102, that is to say, the thickness of the quartz birefringent plate 102 in the unit in which that ultra-wide band 1/2 waveplate 104 is included. For example, when rotating the ultra-wide band 1/2 waveplate 104a by five (5) degrees, the ultra-wide band 1/2 waveplate 104b is rotated by ten (10) degrees, the ultra-wide band 1/2 waveplate 104c is rotated by 20 degrees, the ultra-wide band 1/2 waveplate 104d is rotated by 40 degrees, and the ultra-wide band 1/2 waveplate 104e is rotated by 80 degrees.

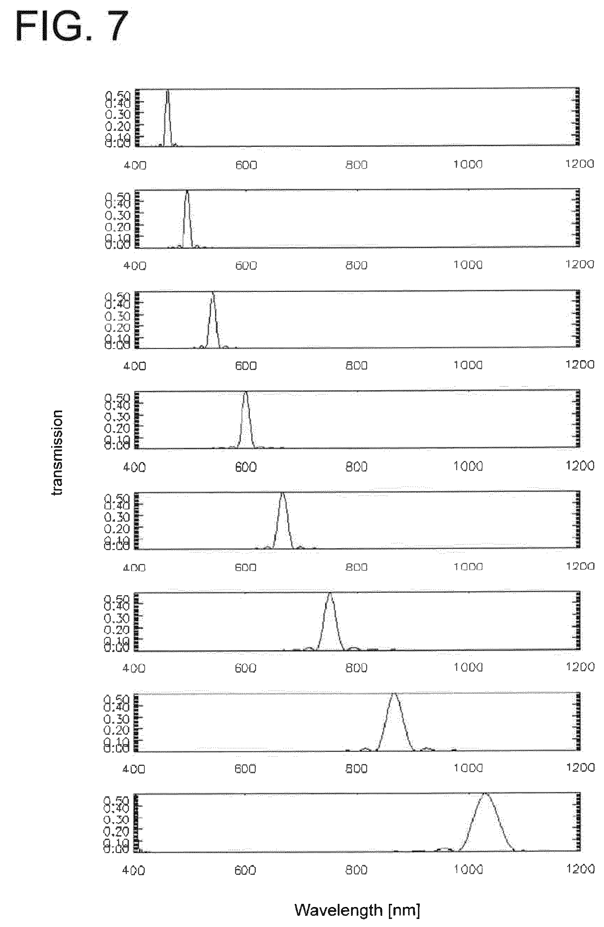

More specifically described, by thickening the thickness of the quartz birefringent plates 102 by two folds, the number of crests in the waveform of the transmitted light increases by two folds, and the width of the crests becomes smaller (the intervals between the crests of the interference fringe is in inverse proportion to the thickness of the quartz birefringent plate). As a result, by superimposing these birefringent plates 102, the crests of a narrow band remain by the light being transmitted just where the crests overlap, and where the crests do not overlap, no light is transmitted since the valley cancels out the crest, as shown in Fig. 6. For example, by making the transmitted light come to a peak where the wavelength is 600 nm, a light of a narrow band with 600 nm as its center is obtained. Furthermore, by rotating the ultra-wide band 1/2 waveplates 104 in one in accordance with a thickness of a respective one of the quartz birefringent plates 102, that is to say, an angle in accordance with a thickness of the quartz birefringent plate 102 in the unit that includes that ultra-wide band 1/2 waveplate 104, it is possible to gradually shift the peak value of the transmitted light, as shown in Fig. 7.

According to the wavelength tunable filter 200 according to the present invention, it is possible to selectively transmit light of a desired wavelength without replacing the optical elements inside. The number of units is not limited to five, and may be increased or decreased to any number depending on a desired transmitted amount of light and wavelength purity. For example, by increasing the number of units and increasing the number of polarizers 101 in response to this, the width of the transmitted wavelength narrows, thus allowing for obtaining light of higher wavelength purity.

The above describes a suitable or preferred embodiment of the present invention, however, the present invention is not limited to the above embodiment, and it is needless to say that various modifications are possible within a range not departing from the gist of the present invention.

For example, adjacent members of the polarizer 101, the quartz birefringent plate 102, and the ultra-wide band 1/4 waveplate 103 may be closely adhered together and integrated into one. By closely adhering and integrating the adjacent polarizer 101, quartz birefringent plate 102 and ultra-wide band 1/4 waveplate 103 together, not only can the wavelength tunable filter 200 be reduced in size, but this will make diffusing light pass through more easily.

As other modification, for example, the photosensor 302 may be provided within the housing 201.

### Industrial Applicability

The wavelength tunable filter according to the present invention can selectively transmit light that has a desired wavelength in an ultra-wide band from a visible region to an infrared region, and thus can be used as a spectrograph. Moreover, since it is also possible to use colors of various substances continuously in a wide range as spectroscopic observation, it is possible to identify a substance or detect any defects therein, based on the detected wavelength data. Furthermore, by having a white-colored light source such as a halogen lamp enter, this can be used as a light source that transmits and irradiates just light of a desired wavelength.

## Claims

1. A wavelength tunable filter (200) having n+1 (n is an integer) polarizers (101a to 101f) disposed on a common optical axis (111); n units disposed between said polarizers (101 a to 101f), arranged by aligning on said optical axis (111); and a housing (201) adapted to hold said polarizers (101 a to 101f) and said units therein,
said wavelength tunable filter (200) **characterized in that**:
each of said units includes, in an order that incident light transmits, a quartz birefringent plate (102), an ultra-wide band 1/4 waveplate (103) and an ultra-wide band 1/2 waveplate (104), each of said n quartz birefringent plates (102a to 102e) having a thickness of 2ⁱ⁻¹d (i=1 to n) where d is a thickness of the thinnest quartz birefringent plate (102); and
said ultra-wide band 1/2 waveplate (104) is held by a cylindrical rotatable body (303; 403; 503) which is rotated by a rotating mechanism.

2. A wavelength tunable filter (200) according to claim 1, wherein said rotating mechanism is a stepping motor (301) provided outside said housing (201).

3. A wavelength tunable filter (200) according to claim 2, wherein said rotating mechanism is an ultrasonic motor (401) provided adjacent to said rotatable body (403).

4. A wavelength tunable filter (200) according to claim 1, wherein said rotating mechanism is constituted by a combination of an annular member (501) provided on an outer circumference of said housing (201) in a rotatable manner, a first megnet (502) attached to said annular member (501) and a second magnet (504) attached to said rotatable body (503).
